Europäisches Patentamt

European Patent Office

Office européen des brevets

(19)

(11) Numéro de publication : **0 384 845 B1**

(12)

# FASCICULE DE BREVET EUROPEEN

(45) Date de publication du fascicule du brevet :
**31.03.93 Bulletin 93/13**

(51) Int. Cl.$^5$ : **B65H 75/34, H02G 11/02**

(21) Numéro de dépôt : **90400496.7**

(22) Date de dépôt : **22.02.90**

(54) **Dispositif à enrouleur-dérouleur pour annuler la torsion dans un lien au niveau d'une liaison tournante.**

(30) Priorité : **24.02.89 FR 8902397**

(43) Date de publication de la demande :
**29.08.90 Bulletin 90/35**

(45) Mention de la délivrance du brevet :
**31.03.93 Bulletin 93/13**

(84) Etats contractants désignés :
**AT BE DE DK ES FR GB IT NL SE**

(56) Documents cités :
**FR-A- 2 188 593**
**GB-A- 2 057 707**
**US-A- 3 099 412**
**US-A- 3 539 123**

(56) Documents cités :
**US-A- 4 565 333**
**PATENT ABSTRACTS OF JAPAN vol. 8, no. 146 (M-307)(1583) 07 juillet 1984, & JP-A-59 043776 (MITSUBISHI JUKOGYO K. K.) 10 mars 1984,**

(73) Titulaire : **DELACHAUX S.A.**
**119, Avenue Louis-Roche**
**F-92231 Gennevilliers (FR)**

(72) Inventeur : **Lacour, Gilles**
**Lechaud**
**F-01300 Belley (FR)**

(74) Mandataire : **Martin, Jean-Jacques et al**
**Cabinet REGIMBEAU 26, Avenue Kléber**
**F-75116 Paris (FR)**

EP 0 384 845 B1

Jouve, 18, rue Saint-Denis, 75001 PARIS

## Description

La présente invention concerne un dispositif enrouleur-dérouleur pour annuler la torsion d'un lien dans un liaison tournante entre un élément fixe et un élément mobile, auxquels sont respectivement fixées les deux extrémités du lien.

On connaît déjà dans la technique antérieure, notamment par le brevet FR-A-2 188 593, un dispositif enrouleur-dérouleur comprenant une bobine fixe et une bobine mobile de même axe, conçues pour être rendues respectivement solidaires de l'élément fixe et de l'élément mobile de la liaison tournante, et un bras susceptible de tourner autour dudit axe et portant à son extrémité libre une poulie satellite qui, lorsqu'elle tourne à une vitesse inférieure à la vitesse de rotation de la bobine mobile, transfère le lien de la bobine mobile à la bobine fixe ou réciproquement, et des moyens d'entraînement du bras en rotation comprenant au moins un accouplement glissant dont le primaire est relié à la bobine mobile par l'intermédiaire d'un premier mécanisme à roue libre et à la bobine fixe par l'intermédiaire d'un second mécanisme à roue libre, et dont le secondaire est solidaire du bras.

Un inconvénient majeur de ce dispositif connu réside en ce que l'axe de la poulie-satellite est perpendiculaire à l'axe des bobines. Il en résulte que, lorsqu'il est utilisé avec par exemple avec des câbles plats à fibres optiques ou autres, des torsions substantielles sont appliquées au câble, notamment entre les bobines et la poulie satellite, du fait du changement de direction marqué dudit câble.

Par ailleurs, dans ce dispositif connu, le ou les accouplements glissants consistent en des embrayages à friction. Ce type d'embrayage est désavantageux en ce qu'il n'est pas à même de transmettre au bras un couple d'entraînement ou de freinage constant. En particulier, il se produit lors du démarrage ou de l'arrêt, étant donné le passage du frottement du mode statique au mode dynamique ou réciproquement, des à-coups qui peuvent s'avérer tout à fait préjudiciables pour les câbles tels que les fibres optiques.

La présente invention vise à pallier ces inconvénients de la technique antérieure et à proposer un dispositif enrouleur-dérouleur dans lequel le transfert entre la bobine fixe et la bobine mobile, et réciproquement, puisse s'effectuer de façon extrêmement régulière, avec une tension dans le lien uniforme et des torsions imprimées au lien qui soient réduites au minimum.

Plus précisément, un objet de l'invention est de proposer un dispositif qui permette de traiter des liens de types tout à fait divers, et notamment des câbles plats à fibres optiques ou analogues, sans engendrer de perturbations notables dans ceux-ci.

A cet effet, la présente invention concerne un dispositif enrouleur-dérouleur du type indiqué en introduction, caractérisé en ce que:

- la bobine fixe et la bobine mobile sont des bobines étroites, disposées à proximité l'une de l'autre, et
- la poulie satellite tourne autour d'un axe faiblement incliné par rapport à l'axe commun des bobines fixe et mobile.

Dans la définition ci-dessus et dans la description qui suit, on entend par "bobines étroites" des bobines dont le nombre d'enroulements côte-à-côte est sensiblement inférieur au nombre d'enroulements en superposition. A la limite, il peut s'agir de bobines monospire dont la largeur intérieure est égale ou légèrement supérieure à la largeur du lien.

Des aspects préférés du dispositif selon l'invention sont les suivants :

- le ou chaque accouplement glissant consiste en un coupleur magnétique.
- il comprend deux accouplements glissants dont les primaires sont respectivement reliés aux deux mécanismes à roue libre et dont les secondaires sont tous deux solidaires du bras.
- les moyens d'entraînement comprennent en outre un arbre d'entraînement solidaire de la bobine mobile, dont une extrémité est apte à être reliée à l'élément mobile de la liaison tournante et dont l'extrémité opposée est reliée au premier mécanisme à roue libre.
- le second mécanisme à roue libre est relié à la bobine fixe par l'intermédiaire d'une pièce fixe située dans le prolongement dudit arbre d'entraînement, cette pièce étant fixée sur un bâti du dispositif sur lequel est également fixée la bobine fixe.
- le bras est solidaire d'un arbre auxiliaire monté rotatif sur les extrémités en vis-à-vis de l'arbre d'entraînement et de la pièce fixe.
- les primaires des deux accouplements glissants sont fixés sur deux flasques montés rotatifs sur ledit arbre auxiliaire.
- il comprend un accouplement glissant unique dont le primaire est fixé sur un flasque relié aux deux mécanismes à roue libre et monté rotatif sur un arbre d'entraînement solidaire de la bobine mobile et apte à être relié à l'élément mobile de la liaison tournante, et le bras est également monté rotatif sur ledit arbre d'entraînement.
- le bras présente la forme générale d'un "L" dont une partie s'étend à l'extérieur desdites bobines et essentiellement perpendiculairement à leur axe et dont l'autre partie est essentiellement parallèle audit axe et porte à son extrémité libre la poulie satellite.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels:

- les figures 1 et 2 sont des vues en élévation schématiques et partiellement en coupe de dispositifs selon deux formes de réalisation de l'invention, la vue de la figure 2 étant seulement partielle, et

- la figure 3 est une vue de dessus, schématique et partielle, du dispositif de la figure 1.

On indiquera tout d'abord que, d'une figure à l'autre, des éléments ou parties identiques ou similaires sont désignés par les mêmes numéros de référence.

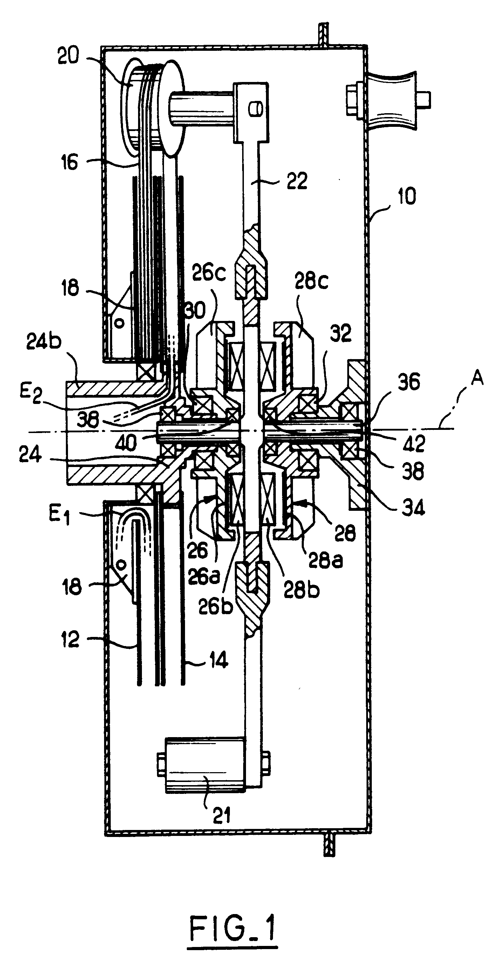

Le dispositif représenté sur la figure 1 est destiné à être incorporé à une liaison tournante entre un élément mobile et un élément fixe (non illustrés), auxquels les deux extrémités d'un lien 16 sont respectivement fixées, afin d'annuler la torsion dudit lien lorsque les éléments tournent l'un par rapport à l'autre. Il comprend, dans un bâti fixe 10 solidaire de l'élément fixe de la liaison, deux bobines accumulatrices 12 et 14 entre lesquelles le lien 16, tel qu'un câble, tuyau ou autre, doit être transféré lorsqu'une rotation relative existe entre les deux bobines. La bobine 12 est fixe, en étant par exemple montée rigidement sur le bâti par l'intermédiaire de pièces de fixation 18, tandis que la bobine 14 est mobile en rotation, en étant comme on le verra plus loin solidaire de l'élément mobile de la liaison tournante, cet élément mobile pouvant être mû par des moyens d'entraînement propres. Ce peut être par exemple une bobine principale d'enrouleur, sur laquelle le lien est enroulé ou à partir de laquelle il est déroulé.

De façon connue, c'est ce mouvement de transfert qui rend possible une rotation relative des deux extrémités E1 et E2 du lien, solidaires respectivement de la bobine fixe et de la bobine mobile, sans globalement engendrer de torsion dans celui-ci, grâce à l'inversion du sens d'enroulement du lien d'une bobine accumulatrice à l'autre.

Conventionnellement également, ce transfert s'effectue par l'intermédiaire d'une poulie de renvoi dite satellite 20 qui est montée folle à l'extrémité d'un bras 22. Ce bras 22 peut tourner autour de l'axe A commun aux bobines.

Dans un tel dispositif, en supposant qu'aucun mou n'apparaît dans le lien, et en supposant que les deux bobines 12 et 14 sont géométriquement identiques, la vitesse de rotation Vb du bras 22 est lié à la vitesse de rotation Vm de la bobine mobile 14 par la relation suivante :

$$Vb = (Rm/Rf + Rm).Vm \quad (1),$$

où Rm est le rayon instantané d'enroulement du lien sur la bobine mobile 14, et Rf est le rayon instantané d'enroulement du lien sur la bobine fixe 12.

Rm et Rf variant au cours de l'enroulage et du déroulage, on constate d'ores et déjà qu'il est nécessaire d'établir une relation qui évolue au cours du temps entre la vitesse de rotation de la bobine mobile et la vitesse de rotation du bras.

Par ailleurs, la relation entre le couple Cb appliqué au bras 22 pour exécuter le transfert précité et la tension T dans le lien s'exprime comme suit :

$$Cb = T. (Rf + \sqrt{(Re^2 + Ri^2 - Rf^2)}) \quad (2)$$

où Ri est le rayon d'enroulement minimal des bobines 12 et 14 (bobines vides) et Re est le rayon d'enroulement maximal des bobines 12 et 14 (bobines pleines).

Pour obtenir une tension T dans le lien aussi constante que possible, il est nécessaire en premier lieu d'assurer que le couple d'entraînement Cb appliqué au bras soit aussi constant que possible.

On va maintenant décrire ci-dessous les moyens utilisés conformément à l'invention pour remplir les conditions ci-dessus, et donc assurer le transfert du lien dans des conditions optimales.

Le bras 22 portant la poulie satellite 20 est monté fou par rapport à un arbre d'entraînement 24 et est relié à cet arbre et au bâti fixe 10 par l'intermédiaire de deux coupleurs magnétiques 26, 28 et de deux mécanismes à roue libre, schématiquement représentés et désignés par les références 30 et 32, comme on le verra en détail plus loin. Les coupleurs magnétiques utilisés ont pour propriété de transmettre entre l'inducteur et l'induit un couple essentiellement constant, indépendamment de tout glissement pouvant apparaître entre ceux-ci.

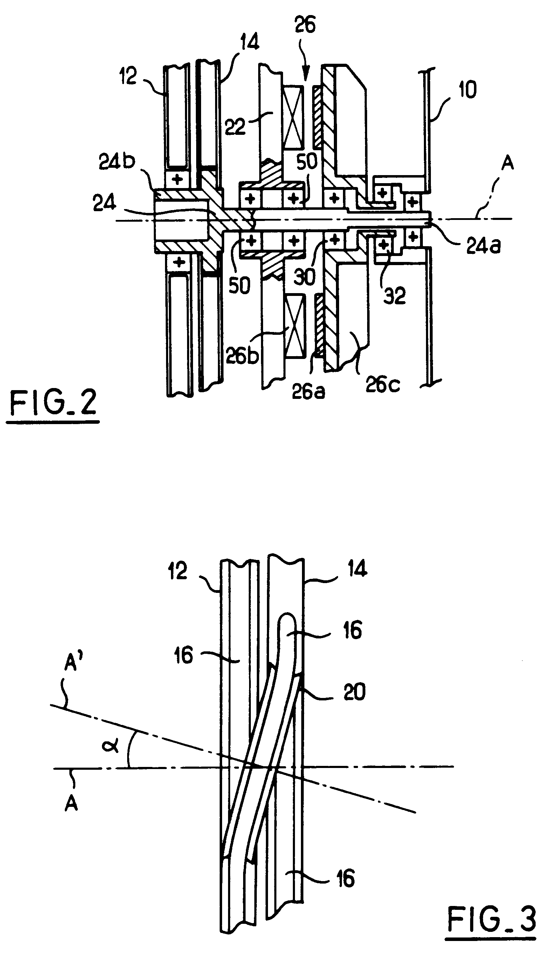

En outre, dans le but de limiter à un minimum les contraintes dans le lien 16, notamment lorsque celui-ci est constitué par un câble plat à fibres optiques, les deux bobines accumulatrices 12 et 14 sont placées immédiatement adjacentes l'une à l'autre et l'axe A' de la poulie satellite 20 n'est que peu incliné par rapport à l'axe A, comme le montre en particulier la figure 3. En corollaire, le bras 22 porte-satellite présente la forme d'un "L" pour amener la poulie 20 au droit de la frontière entre les deux bobines en passant à l'extérieur de celles-ci.

L'arbre d'entraînement 24 est conçu pour être rendu solidaire, au niveau de son extrémité 24b, de l'élément mobile de la liaison tournante, par exemple d'une bobine principale qui est elle même entraînée par un moteur d'entraînement (ces éléments n'étant pas illustrés). La bobine mobile 14 est solidaire de l'arbre 24.

La première roue libre 30 assure une liaison d'entraînement positif entre l'arbre 14 et un primaire ou induit 26a du premier coupleur magnétique 26 dans le sens du déroulement du lien 16 depuis la bobine mobile 14. La seconde roue libre 32 est apte à immobiliser le primaire ou induit 28a du second coupleur magnétique 28, en agissant entre ledit induit et une pièce 34 qui est fixée rigidement sur le bâti 10 de l'enrouleur, dans le sens de l'enroulement du lien 16 sur la bobine mobile 14. Par ailleurs, les secondaires ou inducteurs respectifs 26b, 28b des deux coupleurs 26, 28 sont tous deux fixés rigidement sur le bras 22.

Le dispositif selon cette forme de réalisation présente par ailleurs les particularités suivantes. L'arbre 22 s'étend sensiblement symétriquement de part et d'autre de l'axe A et porte à son extrémité opposée à la poulie 20 un contre-poids 21.

De plus, le bras 22 est monté rigidement sur un arbre auxiliaire 36 qui est monté fou par l'intermédiaire de paliers 38 dans les extrémités en vis-à-vis de l'arbre d'entraînement 24 et de la pièce fixe 34. Les induits 26a, 28a sont portés respectivement par des flasques 26c, 28c qui sont montés fous sur l'arbre 36 par l'intermédiaire de paliers, référencés 40, 42.

Enfin l'extrémité fixe E1 du lien débouche dans le bâti 10 à partir du fond de la bobine fixe 12, et peut poursuivre son chemin comme souhaité vers tout dispositif solidaire du bâti, tandis que l'extrémité tournante E2 du lien débouche à l'intérieur de l'arbre 24, et peut poursuivre son chemin vers tout dispositif tournant solidaire dudit arbre.

Le fonctionnement du dispositif selon l'invention est le suivant. Dans le sens de déroulement du lien 16 depuis la bobine mobile, l'arbre 24 entraîne l'induit 26a du coupleur 26 par l'intermédiaire de la première roue libre 30. La liaison électromagnétique entre l'inducteur 26b et l'induit 26a transmet alors au bras 22 un couple égal au couple nominal du coupleur, tendant à faire tourner ledit bras dans le même sens que l'arbre 24 et la bobine mobile 14, et à une vitesse qui peut varier grâce à un glissement dans le coupleur.

Ce couple constant a pour effet de maintenir dans la partie du lien située entre les deux bobines accumulatrices 12 et 14 une tension essentiellement constante, dont la valeur ne varie que légèrement en fonction de l'évolution dans les temps des paramètres Rf et Rm comme indiqué plus haut. Le bras 22 et la poulie 20 sont ainsi entraînés en rotation pour assurer l'enroulement du lien 16 sur la bobine fixe 12 et son dévidage de la bobine mobile 14.

On peut noter que pendant ce mouvement, l'inducteur 28b du coupleur 28 et l'induit associé 28a peuvent accompagner librement le bras 22 dans sa rotation, sans lui impartir de couple, car l'induit 28a est libre de tourner par rapport à la pièce 34 grâce à la roue libre 32, qui ne peut effectuer un entraînement positif que dans le sens opposé.

Dans le sens de l'enroulement du lien 16 sur la bobine mobile 14, ledit lien entraîne le bras 22 en agissant sur la poulie de renvoi 20, et simultanément le bras 22 subit un couple de freinage constant. Plus précisément, la roue libre 32, sollicitée dans le sens de son entraînement positif, empêche le flasque 28c de tourner par rapport à la pièce fixe 34 et au bâti. L'induit 28a étant immobile, il exerce sur le bras 22 par coopération magnétique avec l'inducteur 28b, indépendamment de la vitesse dudit bras, un freinage à couple constant. Une tension constante est donc ici encore maintenue dans le lien.

On peut noter que, dans ce cas, l'induit 26a et l'inducteur 26b du premier coupleur 26 sont libres de tourner dans le même sens que le bras 22, et sans lui appliquer de couple indésirable, étant donné que le mécanisme à roue libre 30 est alors sollicité dans le sens inverse du sens d'entraînement positif.

Les avantages du dispositif selon la présente invention sont rappelés ci-dessous.

Tout d'abord, grâce à la disposition particulière des bobines et de la poulie satellite, on comprend que seule une torsion minime est engendrée dans le lien 16. A cet égard, l'angle $\alpha$ entre l'axe A' du satellite et l'axe A des bobines est choisi au cas par cas en fonction de la géométrie des divers éléments. Pratiquement, il peut varier selon les cas entre environ 0 et 45° (environ 15° sur la figure 3).

Cela étant, il est souhaitable pour certains types de câbles de maintenir l'angle $\alpha$ aussi faible que possible. Dans ce cas, si l'on est amené pour une raison quelconque à utiliser des bobines plus larges ou plus espacées axialement, on peut, pour éviter d'accroître $\alpha$ en conséquence, augmenter le diamètre de la poulie-satellite.

De plus, grâce à l'utilisation de coupleurs magnétiques, le couple d'entraînement du bras est constant et peut être déterminé avec précision par le réglage des coupleurs 26 et 28. Par ailleurs, on peut si on le souhaite utiliser des couples différents dans un sens et dans l'autre. La traction dans le lien 16 est donc en permanence parfaitement contrôlée, en suivant la relation (2) mentionnée plus haut avec seulement de faibles variations dues aux variations de Rf et Rm.

A cet égard, on pourrait démontrer que, si le rapport entre Re et Ri est égal par exemple à trois, la traction appliquée au lien ne subit pas de variations relatives supérieures à 12 %. Ces variations passent à seulement 5 % lorsque le rapport précité est égal à deux.

En outre, quels que soient les valeurs des rayons d'enroulement instantanés Rf et Rm, le bras 22 et la poulie 20 sont toujours entraînés à la vitesse appropriée. En effet, les coupleurs glissants 26 et 28, dans un sens comme dans l'autre, permettent au bras 22 d'adopter n'importe quelle vitesse angulaire comprise entre 0 et la vitesse angulaire Vm de la bobine mobile 14.

On a représenté sur la vue en élévation partielle de la figure 2 une seconde forme de réalisation de l'invention. Sur cette figure et sur la suivante, des éléments ou parties identiques ou similaires à ceux de la figure 1 sont désignés par les mêmes numéros de référence.

Dans cette réalisation, l'arbre d'entraînement 24 est prolongé (vers la droite sur la figure) par une partie 24a qui vient se substituer à l'arbre auxiliaire 36 pour supporter le bras 22 en rotation par l'intermédiaire de paliers 50. En outre, cette variante ne comporte qu'un seul coupleur 26 dont l'inducteur 26b est fixé au bras 22 et dont l'induit 26a est fixé à un flasque 26c. Le flasque 26c est monté sur le prolongement 24a de l'arbre d'entraînement par l'intermédiaire d'un premier mécanisme à roue libre 30 et sur la pièce fixe 34 par l'intermédiaire d'un second mécanisme à roue libre 32. Ces deux mécanismes sont montés dans le même sens que sur la figure 1. Par ailleurs, les bobines 12 et 14 et le satellite 20 sont disposés mutuellement de la même manière que dans le cas de la figure 1.

Le fonctionnement du dispositif selon cette variante de réalisation est tout à fait analogue à celui du dispositif de la figure 1, à ceci près que le coupleur unique 26 joue le rôle des deux coupleurs 26, 28 de la figure 1.

Bien que la présente invention ait été décrite en liaison avec une bobine principale pour l'enroulage et le déroulage du lien, elle peut être utilisée également pour la liaison tournante sur un nombre de tours fini par exemple entre un mât de grue et sa tourelle, et plus généralement dans toute application dans laquelle deux éléments pouvant tourner l'un par rapport à l'autre doivent être reliés par un lien tel qu'un câble, tuyau ou autre, dont les extrémités sont respectivement fixées sur ces éléments, sans faire appel à un collecteur et sans induire de torsion dans ledit lien. Dans le cas précité d'une grue, le bâti 10 du dispositif enrouleur peut être monté fixe sur le mât de la grue, tandis que sa tourelle est montée fixe sur la partie d'accouplement 24b de l'arbre d'entraînement 24.

Par ailleurs, bien que l'on ait décrit l'invention en liaison avec des bobines accumulatrices monospires, il est bien entendu qu'elle s'applique à des bobines comprenant plusieurs spires. Cela étant, dans le cas de liens auxquels on doit impartir une torsion aussi faible que possible lors de leur transfert d'une bobine à l'autre (par exemple câbles plats à fibres optiques), le nombre de spires sera réduit autant que possible. L'angle $\alpha$ mentionné plus haut sera par ailleurs ajusté en fonction de la largeur des bobines.

De plus, l'homme de l'art saura mettre en oeuvre les concepts de l'invention tels qu'exprimés ci-dessus pour réaliser un dispositif comportant plusieurs paires de bobines accumulatrices, à chaque paire étant associée une poulie satellite propre.

Enfin, les notions de fixité et de mobilité utilisées tout au long de la présente description sont à considérer dans un sens relatif. Par exemple, l'arbre d'entraînement 24 peut être fixe, alors que c'est le bâti 10 qui est entraîné en rotation et solidaire de l'élément mobile de la liaison tournante. On peut également envisager que les deux éléments de la liaison tournante tournent avec une rotation différentielle.

## Revendications

1. Dispositif enrouleur-dérouleur pour annuler la torsion d'un lien (16) dans un liaison tournante entre un élément fixe et un élément mobile, auxquels sont respectivement fixées les deux extrémités du lien, du type comprenant une bobine fixe (12) et une bobine mobile (14) de même axe (A), conçues pour être rendues respectivement solidaires de l'élément fixe et de l'élément mobile de la liaison tournante, et un bras (22) susceptible de tourner autour dudit axe et portant à son extrémité libre une poulie satellite (20) qui, lorsqu'elle tourne à une vitesse inférieure à la vitesse de rotation de la bobine mobile, transfère le lien de la bobine mobile à la bobine fixe ou réciproquement, et des moyens d'entraînement du bras en rotation comprenant au moins un accouplement glissant (26,28; 26) dont le primaire est relié à la bobine mobile par l'intermédiaire d'un premier mécanisme à roue libre (30) et à la bobine fixe par l'intermédiaire d'un second mécanisme à roue libre (32), et dont le secondaire est solidaire du bras, caractérisé en ce que:
   - la bobine fixe (12) et la bobine mobile (14) sont des bobines étroites, disposées à proximité l'une de l'autre, et
   - la poulie satellite (20) tourne autour d'un axe (A') faiblement incliné par rapport a l'axe commun (A) des bobines fixe et mobile.

2. Dispositif selon la revendication 1, caractérisé en ce que le ou chaque accouplement glissant (26,28; 26) consiste en un coupleur magnétique.

3. Dispositif selon l'une des revendications 1 et 2, caractérisé en ce qu'il comprend deux accouplements glissants (26,28) dont les primaires sont respectivement reliés aux deux mécanismes à roue libre (30,32) et dont les secondaires sont tous deux solidaires du bras (22).

4. Dispositif selon la revendication 3, caractérisé en ce que les moyens d'entraînement comprennent en outre un arbre d'entraînement (24) solidaire de la bobine mobile (14), dont une extrémité (24b) est apte à être reliée à l'élément mobile de la liaison tournante et dont l'extrémité opposée est reliée au premier mécanisme à roue libre (30).

5. Dispositif selon la revendication 4, caractérisé en ce que le second mécanisme à roue libre (32) est relié à la bobine fixe (12) par l'intermédiaire d'une pièce fixe (34) située dans le prolongement dudit arbre d'entraînement (24), cette pièce étant fixée sur un bâti (10) du dispositif sur lequel est également fixée la bobine fixe (12).

6. Dispositif selon la revendication 5, caractérisé en ce que le bras (22) est solidaire d'un arbre auxiliaire (36) monté rotatif sur les extrémités en vis-à-vis de l'arbre d'entraînement (24) et de la pièce fixe (34).

7. Dispositif selon la revendication 6, caractérisé en ce que les primaires des deux accouplements glissants (26,28) sont fixés sur deux flasques (26c,28c) montés rotatifs sur ledit arbre auxiliaire (36).

8. Dispositif selon la revendication 1, caractérisé en ce qu'il comprend un accouplement glissant unique (26) dont le primaire est fixé sur un flasque (26c) relié aux deux mécanismes à roue libre (30,32) et monté rotatif sur un arbre d'entraînement (24) solidaire de la bobine mobile (14) et apte à être relié à l'élément mobile de la liaison tournante, et en ce que le bras (22) est également monté rotatif sur ledit arbre d'entraînement.

9. dispositif selon l'une des revendications 1 à 7, caractérisé en ce que le bras (22) présente la forme générale d'un "L" dont une partie s'étend à l'extérieur desdites bobines et essentiellement perpendiculairement à leur axe et dont l'autre partie est essentiellement parallèle audit axe et porte à son extrémité libre la poulie satellite (20).

**Patentansprüche**

1. Auf- und Abwicklervorrichtung zur Vermeidung der Torsion eines Verbindungsteiles in einer rotierenden Kupplung zwischen einem festen Element und einem beweglichen Element, an denen jeweils die beiden Enden des Verbindungsteiles befestigt sind, des Types mit einer festen Spule (12) und einer bewegbaren Spule (14) mit gleicher Achse (A), dafür gedacht, jeweils einstückig mit dem festen Element und dem beweglichen Element der rotierenden Kupplung gebildet zu sein, und einem Arm (22), der imstande ist, sich um die Achse zu drehen und an seinem freien Ende ein Planetenrad (20) trägt, welches, wenn es sich mit einer geringeren Geschwindigkeit als der Drehgeschwindigkeit der beweglichen Spule dreht, den Verbindungsteil von der beweglichen Spule zu der festen Spule oder umgekehrt überführt, und Einrichtungen zum Drehantreiben des Armes mit wenigstens einer Rutschkupplung (26,28; 26), deren Primärseite mit der bewegbaren Spule durch Zwischenschaltung eines ersten Freilaufmechanismus (30) und mit der festen Spule durch Zwischenschaltung eines zweiten Freilaufmechanismus (32) verbunden ist und deren Sekundärseite einstückig mit dem Arm ist, dadurch gekennzeichnet, daß:
    - die feste Spule (12) und die bewegbare Spule (14) schmale Spulen sind, die einander benachbart angeordnet sind, und
    - das Planetenrad (20) sich um eine Achse (A') dreht, die schwach in bezug auf die gemeinsame Achse (A) der festen und der bewegbaren Spule geneigt ist.

2. Vorrichtung nach Anspruch 1, dadurch gekennzeichnet, daß die oder jede Rutschkupplung (26,28; 26) aus einer Magnetkupplung besteht.

3. Vorrichtung nach Anspruch 1 oder 2, dadurch gekennzeichnet, daß sie zwei Rutschkupplungen (26,28) aufweist, deren Primärseiten jeweils mit zwei Freilaufmechanismen (30,32) verbunden sind und deren Sekundärseiten beide einstückig mit dem Arm (22) sind.

4. Vorrichtung nach Anspruch 3, dadurch gekennzeichnet, daß die Antriebseinrichtungen weiterhin eine Antriebswelle (24) umfassen, die einstückig mit der bewegbaren Spule (14) ist, dessen eines äußeres Ende (24b) geeignet dafür ist, mit dem bewegbaren Element der rotierenden Kupplung verbunden zu werden, und deren gegenüberliegendes äußeres Ende mit dem ersten Freilaufmechanismus (30) verbunden ist.

5. Vorrichtung nach Anspruch 4, dadurch gekennzeichnet, daß der zweite Freilaufmechanismus (32) mit der festen Spule (12) durch Zwischenschaltung eines festen Stückes (34) verbunden ist, welches in der Verlängerung der Antriebswelle (24) gelegen ist, wobei dieses Stück auf einem Gestell (10) der Vorrichtung befestigt ist, auf dem gleichermaßen die feste Spule (12) befestigt ist.

6. Vorrichtung nach Anspruch 5, dadurch gekennzeichnet, daß der Arm (22) einstückig mit einer Hilfswelle (36) ist, die drehbar auf den äußeren Enden gegenüber der Antriebswelle (24) und dem festen Teil (34) angebracht ist.

7. Vorrichtung nach Anspruch 6, dadurch gekennzeichnet, daß die Primärseiten der beiden Rutschkupplungen (26,28) auf zwei Flanschen (26c,28c) befestigt sind, die drehbar auf der Hilfswelle (36) angebracht sind.

8. Vorrichtung nach Anspruch 1, dadurch gekennzeichnet, daß sie eine einzige Rutschkupplung (36) aufweist, deren Primärseite auf einem Flansch (26c) befestigt ist, welcher mit zwei Freilaufmechanismen (30, 32) befestigt und drehbar auf einer Antriebswelle (24) angebracht ist, die einstückig mit der bewegbaren Spule (14) ist und geeignet ist, mit dem beweglichen Element der rotierenden Kupplung verbunden zu werden, und daß der Arm (22) gleichermaßen drehbar auf der Antriebswelle angebracht ist.

9. Vorrichtung nach einem der Ansprüche 1 bis 7, dadurch gekennzeichnet, daß der Arm (22) die allgemeine Form eines "L" zeigt, dessen eines Teil sich außerhalb der Spulen und im wesentlichen senkrecht zu ihrer Achse erstreckt und dessen anderes Teil im wesentlichen parallel zu der Achse ist und an seinem äußeren freien Ende das Planetenrad (20) trägt.

## Claims

1. Paying out /winding in device for eliminating torsion in a line (16) in a rotary connection between a fixed member and a mobile member to which respective ends of said line are fixed, of the type comprising a fixed spool (12) and, a mobile spool (14) having the same axis (A), arranged to be made fixed relative to the fixed member and the mobile member of the rotary connection, respectively, and an arm (22) rotatable about said axis and carrying at its free end a satellite pulley (20) which, when rotating more slowly than the mobile spool, tranfers the line from the mobile spool to the fixed spool or vice-versa, and drive means for rotating the arm comprising at least one sliding coupling (26, 28, 26) the primary member of which is coupled to the mobile spool via a first free wheel mechanism (30) and to the fixed spool via a second freewheel mechanism (32), and the secondary member of which is fastened to the fixed spool, characterized in that:
   - the fixed spool (12) and the mobile spool (14) have a small width and are arranged near each other, and
   - the satellite pulley (20) rotates about an axis (A') having a small inclination relative to the common axis (A) of the fixed and mobile spools.

2. Device according to claim 1 characterized in that said at least on sliding coupling (26, 28; 26) is a magnetic coupling.

3. Device according to claim 1 or 2, characterized in that it comprises two sliding couplings (26, 28) each having its primary member coupled to a respective freewheel mechanism (30, 32) and its secondary member fastened to said arm (22).

4. Device according to claim 3, characterized in that said drive means further comprise a drive shaft (24) fastened to said mobile spool (14), one end (24b) of which is adapted to be coupled to the mobile member of the rotary connection, its opposite end being coupled to the first freewheel mechanism (30).

5. Device according to claim 4, characterized in that said second freewheel mechanism (32) is coupled to the fixed spool (12) by a fixed member (34) aligned with said drive shaft (24), said member being fixed to a frame (10) of the device to which said fixed spool (12) is also fixed.

6. Device according to claim 5, characterized in that said arm (22) is fastened to an auxiliary shaft (36) mounted to rotate on mutually facing ends of said drive shaft (24) and said fixed member (34).

7. Device according to claim 6, characterized in that said primary members of said two sliding couplings (26, 28) are fixed to two flanges (26c, 28c) rotatably mounted on said auxiliary shaft.

8. Device according to claim 1, characterized in that it comprises a single sliding coupling (26), the primary member of which is fixed to a flange (26c) coupled to said two freewheel mechanisms (30, 32) and mounted to rotate on a drive shaft (24) fastened to said mobile spool (14) and adapted to be coupled to said mobile member of said rotary connection, and in that said arm (22) is also mounted to rotate on said drive shaft.

9. Device according to anyone of claims 1 to 7, characterized in that said arm (22) is generally L-shaped, with one part extending outwardly of said spools and substantially perpendicularly to their axis, its other part being substantially perpendicularly to their said axis, its other part being substantially parallel to said axis and carrying said satellite pulley (20) at its free end.

EP 0 384 845 B1

FIG_1

8

FIG.2

FIG.3